# EUROPEAN PATENT APPLICATION

(11) **EP 4 664 964 A1**
(43) Date of publication of application: **17.12.2025**
(21) Application number: 23921188.1
(22) Date of filing: 10.02.2023
(51) Int. Cl.: H04W 16/26, H04W 4/42, H04W 84/00

(54) **WIRELESS RELAY DEVICE, MOBILE BODY, TERMINAL DEVICE, WIRELESS COMMUNICATION METHOD, AND PROGRAM**

(71) Applicant: HONDA MOTOR CO., LTD., Tokyo 105-8404 (JP)
(72) Inventor: OTAKA Masaru, Tokyo 107-8556 (JP); OI Yusuke, Tokyo 107-8556 (JP)
(74) Representative: Weickmann & Weickmann PartmbB
(86) International application number: PCT/JP2023/004558
(87) International publication number: WO 2024/166359

(57) **Abstract**

A wireless relay device includes a communication unit which broadcasts broadcast data representing a service that can be provided by the wireless relay device, and a control unit which performs, when an indication is given from a terminal device that the terminal device is to receive provision of the service, processing to connect to the wireless relay device.

## Description

### BACKGROUND

### 1. TECHNICAL FIELD

The present invention relates to a wireless relay device, a movable body, a terminal device, a wireless communication method, and a program.

### 2. RELATED ART

Patent Documents 1 to 4 describe techniques related to mobile communication.

### Prior Art Documents

### Patent Documents

Patent document 1: PCT International Publication No. WO2020/026734
Patent Document 2: Japanese Patent No. 5077460
Patent Document 3: Japanese Patent Application Publication No. 2022-136907
Patent Document 4: Japanese Patent No. 7091284

### Problems to be Solved

When a movable body includes a function of a wireless relay device, a problem occurs that by taking into account that a movable body can be moved, a terminal device needs to be connected to an appropriate connection destination. By solving the above-described problem, the present application may improve stability of communication in the movable body. Consequently, traffic safety may further be improved which may contribute to development of a sustainable transport system. General Disclosure

In a first aspect of the present invention, a wireless relay device is provided. The wireless relay device includes a communication unit which broadcasts broadcast data representing a service that can be provided by the wireless relay device. The wireless relay device includes a control unit which performs, when an indication is given from a terminal device that the terminal device is to receive provision of the service, processing to connect to the wireless relay device.

In the above-described wireless relay device, the communication unit may further receive terminal location information representing location information of the terminal device. The control unit may cause the wireless relay device to cause the communication unit to broadcast the broadcast data when the location information of the terminal device and location information of the wireless relay device meet a predetermined condition.

In any of the above-described wireless relay devices, the control unit may cause the communication unit to broadcast the broadcast data when a degree of coincidence between the location information of the terminal device and the location information of the wireless relay device is higher than a predetermined value.

In any of the above-described wireless relay devices, the control unit may acquire a displacement of the terminal device based on the terminal location information received at different timings by the communication unit, and cause the communication unit to broadcast the broadcast data when the displacement of the terminal device and a displacement of the wireless relay device meet a predetermined condition.

In any of the above-described wireless relay devices, the control unit may cause the communication unit to broadcast the broadcast data when a degree of coincidence between the displacement of the terminal device and the displacement of the wireless relay device is higher than a predetermined value.

In any of the above-described wireless relay devices, the broadcast data may be data broadcasted as reporting information.

In a second aspect of the present invention, a movable body is provided. The movable body includes any of the above-described wireless relay devices.

In the third aspect of the present invention, a program is provided. The program causes a computer to function as any of the above-described wireless relay devices.

In a fourth aspect of the present invention, a terminal device is provided. The terminal device includes a communication unit which receives broadcast data which is broadcasted from a wireless relay device and represents a service that can be provided by the wireless relay device. The terminal device includes a control unit which performs, in response to an indication being given from a user that the user is to receive provision of the service, processing to connect to the wireless relay device.

In the above-described terminal device, the broadcast data may include information representing a connection priority to a wireless network. The broadcast data may further include location information of the wireless relay device. The control unit may perform the processing to connect to the wireless relay device in response to the connection priority to the wireless network being higher than a predetermined value, the location information included in the broadcast data and location information of the terminal device meeting a predetermined condition, and an indication being given from a user that the user is to receive provision of the service.

In any of the above-described terminal devices, the control unit may perform the processing to connect to the wireless relay device in response to the connection priority to the wireless network being higher than the predetermined value, a degree of coincidence between the location information included in the broadcast data and the location information of the terminal device being higher than a predetermined value, and an indication being given from a user that the user is to receive provision of the service.

In any of the above-described terminal devices, the control unit may acquire a displacement of the wireless relay device based on a plurality of pieces of broadcast data received at different timings by the communication unit, and perform the processing to connect to the wireless relay device in response to the connection priority to the wireless network being higher than a predetermined value, the displacement included in the broadcast data and a displacement of the terminal device meeting a predetermined condition, and an indication being given from a user that the user is to receive provision of the service.

In any of the above-described terminal devices, the control unit may perform the processing to connect to the wireless relay device in response to the connection priority to the wireless network being higher than a predetermined value, a degree of coincidence between the displacement included in the broadcast data and the displacement of the terminal device being higher than a predetermined value, and an indication being given from a user that the user is to receive provision of the service.

In any of the above-described terminal devices, when the broadcast data is received, the control unit may cause a notification to be presented to the user, the notification being for acceptance of an indication on whether or not to receive the provision of the service.

In any of the above-described terminal devices, the broadcast data may be data broadcasted as reporting information.

In the fifth aspect of the present invention, a program is provided. The program causes a computer to function as any of the above-described terminal devices.

In a sixth aspect of the present invention, a wireless communication method is provided. The wireless communication method is performed by a wireless relay device. The wireless communication method includes broadcasting broadcast data representing a service that can be provided by the wireless relay device. The wireless communication method includes performing, when an indication is given from a terminal device that the terminal device is to receive provision of the service, processing to connect to the wireless relay device.

In a seventh aspect of the present invention, a wireless communication method is provided. The wireless communication method includes receiving broadcast data which is broadcasted from a wireless relay device and represents a service that can be provided by the wireless relay device. The wireless communication method includes performing, in response to an indication being given from a user that the user is to receive provision of the service, processing to connect to the wireless relay device.

The summary clause does not necessarily describe all necessary features of the embodiments of the present invention. The present invention may also be a sub-combination of the features described above.

### BRIEF DESCRIPTION OF THE DRAWINGS

Fig. 1 schematically illustrates a configuration of a wireless communications system 5 according to an embodiment.
Fig. 2 illustrates an example of a system configuration of a wireless relay device 110.
Fig. 3 illustrates an example of a system configuration of a terminal device 140.
Fig. 4 illustrates an example of information displayed on a display unit 440 when the terminal device 140 receives reporting information from the wireless relay device 110.
Fig. 5 illustrates an example of a sequence according to a wireless communication method performed in the wireless communications system 5.
Fig. 6 illustrates an example of the sequence according to the wireless communication method performed in the wireless communications system 5.
Fig. 7 illustrates an example of a computer 2000 in which a plurality of embodiments of the present invention may be entirely or partially embodied.

### DESCRIPTION OF EXEMPLARY EMBODIMENTS

Hereinafter, the present invention will be described through embodiments of the invention, but the following embodiments do not limit the invention according to claims. In addition, not all of the combinations of features described in the embodiments are essential to the solving means of the invention.

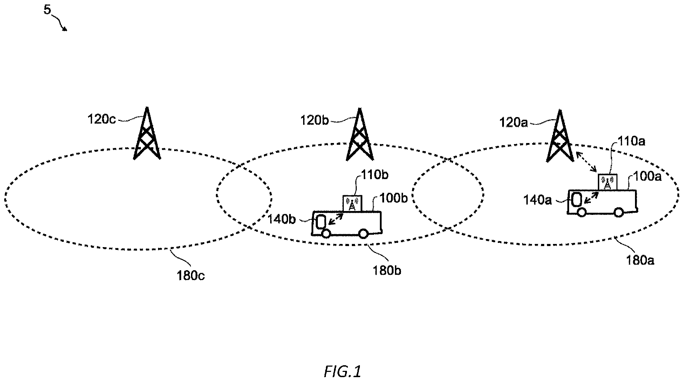

Fig. 1 schematically illustrates a configuration of a wireless communications system 5 according to an embodiment. The wireless communications system 5 includes a wireless base station 120a, a wireless base station 120b, and a wireless base station 120c, a wireless relay device 110a and a wireless relay device 110b, a movable body 100a and a movable body 100b, and a terminal device 140 and a terminal device 140b.

In the present embodiment, the wireless base station 120a, the wireless base station 120b, and the wireless base station 120c may be collectively referred to as a "wireless base station 120" while ends of reference signs are omitted. Similarly, the wireless relay device 110a and the wireless relay device 110b may be collectively referred to as a "wireless relay device 110" while ends of reference signs are omitted. Similarly, the movable body 100a and the movable body 100b may be collectively referred to as a "movable body 100" while ends of reference signs are omitted. Similarly, the terminal device 140a and the terminal device 140b may be collectively referred to as a "terminal device 140" while ends of reference signs are omitted.

The wireless base station 120 is a mobile communication base station supporting one or more mobile communication schemes. Similarly, the wireless relay device 110 and the terminal device 140 are wireless communication apparatuses supporting one or more mobile communication schemes. According to the present embodiment, the mobile communication scheme supported by the wireless base station 120, the wireless relay device 110, and the terminal device 140 may be, for example, a mobile scheme communication used in a mobile communications system such as fourth generation mobile communications system (4G) or fifth generation mobile communications system (5G).

The wireless base station 120 is a base station fixed to a specific location. Each of the wireless base stations 120 forms a cell and performs wireless communication with the wireless relay device 110 and the terminal device 140 by forming the cell. For example, a cell 180a is a cell formed by the wireless base station 120a, a cell 180b is a cell formed by the wireless base station 120b, and a cell 180c is a cell formed by the wireless base station 120c. In the present embodiment, the cell 180a, the cell 180b, and the cell 180c may be collectively referred to as a "cell 180" while ends of reference signs are omitted.

The wireless relay device 110 has a function to perform service provision as a wireless base station for the terminal device 140 and also has a function to receive service provision as a terminal device for the wireless base station 120. The wireless relay device 110 relays communication between the terminal device 140 and the wireless base station 120. The terminal device 140 can access a core network via the wireless base station 120. The terminal device 140 may be able to access the core network via the wireless relay device 110 and the wireless base station 120 even when the terminal device 140 cannot perform wireless communication directly with the wireless base station 120.

The movable body 100 is movable machinery. The movable body 100 is a vehicle such as an automobile such as a bus or a train, for example. The vehicle is an example of transport machinery. The movable body 100 may be various aircrafts including an unmanned aircraft, an artificial satellite, a vessel, or the like. The movable body 100a includes the wireless relay device 110a. The movable body 100b includes the wireless relay device 110b. Accordingly, the wireless relay device 110a is movable together with the movable body 100a, and the wireless relay device 110b is movable together with the movable body 100b.

When the movable body 100a is located in the cell 180a of the wireless base station 120a, the wireless relay device 110a may relay communication between the terminal device 140a possessed by a user aboard the movable body 100a and the wireless base station 120a. In addition to the above, the terminal device 140a can connect to a wireless network provided by the wireless relay device 110a and receive provision of the service provided by the wireless relay device 110a. When the movable body 100b is located in the cell 180b of the wireless base station 120b, the wireless relay device 110b may relay communication between the terminal device 140b possessed by a user aboard the movable body 100b and the wireless base station 120b. In addition to the above, the terminal device 140b can connect to a wireless network provided by the wireless relay device 110b and receive the provision of the service provided by the wireless relay device 110b.

In the wireless communications system 5 of the present embodiment, when the terminal device 140 is located near the wireless relay device 110, the wireless relay device 110 transmits reporting information indicating that it is possible to provide the service through the wireless network provided by the wireless relay device 110. The reporting information in the present embodiment is an example of "broadcast data" broadcasted by the wireless relay device 110. When the terminal device 140 receives the reporting information from the wireless relay device 110 in a case where the terminal device 140 is connected to the wireless base station 120, the terminal device 140 accepts an indication from the user on whether or not to receive the service provision. When the indication is acquired that the user is to receive the service provision, the terminal device 140 switches a connection destination of the terminal device 140 to the wireless relay device 110. The terminal device 140 performs processing to connect to the wireless relay device 110. With this configuration, when the terminal device 140 is present in the cell of the wireless relay device 110, the terminal device 140 can connect to the wireless relay device 110 by using the indication that is explicit from the user of the terminal device 140 as a trigger. Therefore, the terminal device 140 can connect to the wireless relay device 110 at an appropriate timing.

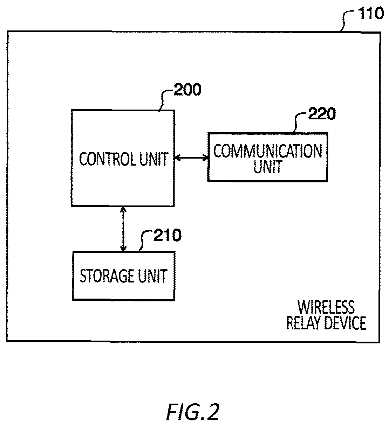

Fig. 2 illustrates an example of a system configuration of the wireless relay device 110. The wireless relay device 110 relays communication between the wireless base station 120 and the terminal device 140. The wireless relay device 110 includes a control unit 200, a storage unit 210, and a communication unit 220.

The control unit 200 performs control of the entire wireless relay device 110. The communication unit 220 is responsible for wireless communication between the wireless base station 120 and the terminal device 140. The control unit 200 is realized by a computing device including a processor. The storage unit 210 is realized including a non-volatile storage medium. The control unit 200 performs processing by using information stored in the storage unit 210. The control unit 200 may be realized by a microcomputer including a CPU, a ROM, a RAM, an I/O, a bus, and the like. The wireless relay device 110 may be realized by a computer. The wireless relay device 110 may be realized by a single computer. The wireless relay device 110 may be realized a plurality of computers. A function of the wireless relay device 110 may be realized by a virtual system that is realized by using a virtualization technique.

The communication unit 220 broadcasts broadcast data representing a service that can be provided by the wireless relay device 110. When an indication is given from the terminal device 140 that the terminal device 140 is to receive the service provision, the control unit 200 performs the processing to connect to the wireless relay device 110.

In the present embodiment, the broadcast data is data broadcasted as the reporting information. The reporting information may be system information in the wireless communications system 5. The system information may be a system information block (SIB). The broadcast data may be data broadcasted on a control plane.

The communication unit 220 further receives terminal location information representing location information of the terminal device 140. When the location information of the terminal device 140 and location information of the wireless relay device 110 meet a predetermined condition, the control unit 200 causes the wireless relay device to cause the communication unit 220 to broadcast the broadcast data.

When a degree of coincidence between the location information of the terminal device 140 and the location information of the wireless relay device 110 is higher than a predetermined value, the control unit 200 causes the communication unit 220 to broadcast the broadcast data.

The control unit 200 may acquire a displacement of the terminal device 140 based on the terminal location information received at different timings by the communication unit 220 and cause the communication unit 220 to broadcast the broadcast data when the displacement of the terminal device 140 and a displacement of the wireless relay device 110 meet a predetermined condition. Specifically, the control unit 200 may acquire the displacement of the terminal device 140 based on the terminal location information received at different timings by the communication unit 220, and the control unit 200 may cause the communication unit 220 to broadcast the broadcast data when a degree of coincidence between the displacement of the terminal device 140 and the displacement of the wireless relay device 110 is higher than a predetermined value.

The displacement of the wireless relay device 110 may be a movement velocity of the wireless relay device 110, and the displacement of the terminal device 140 may be a movement velocity of the terminal device 140. The displacement of the wireless relay device 110 may be a movement direction of the wireless relay device 110, and the displacement of the terminal device 140 may be a movement direction of the terminal device 140.

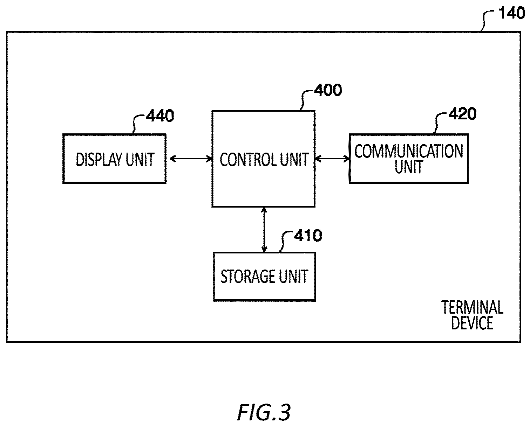

Fig. 3 illustrates an example of a system configuration of the terminal device 140. The terminal device 140 performs communication with the wireless relay device 110 via the wireless relay device 110. The terminal device 140 includes a control unit 400, a storage unit 410, a communication unit 420, and a display unit 440.

The control unit 400 performs control of the entire terminal device 140. The communication unit 420 is responsible for wireless communication between the wireless relay device 110 and the terminal device 140. The control unit 400 is realized by a computing device including a processor. The storage unit 410 is realized including a non-volatile storage medium. The control unit 400 performs processing by using information stored in the storage unit 410. The control unit 400 may be realized by a microcomputer including a CPU, a ROM, a RAM, an I/O, a bus, and the like. The terminal device 140 may be realized by a computer. The terminal device 140 may be realized by a single computer. The terminal device 140 may be realized by a plurality of computers. A function of the terminal device 140 may be realized by a virtual system that is realized by using a virtualization technique.

The communication unit 420 receives broadcast data which is broadcasted from the wireless relay device 110 and represents a service that can be provided by the wireless relay device 110. As described above, in the present embodiment, the broadcast data is the data broadcasted as the reporting information, but the broadcast data may be data transmitted on the control plane. The control unit 400 performs the processing to connect to the wireless relay device 110 in response to an indication being given from the user that the user is to receive provision of the service.

The broadcast data may include information representing a connection priority to the wireless network. The broadcast data may further include location information of the wireless relay device 110. The control unit 400 may perform the processing to connect to the wireless relay device 110 in response to the connection priority to the wireless network being higher than a predetermined value, the location information included in the broadcast data and the location information of the terminal device 140 meeting a predetermined condition, and an indication being given from the user that the user is to receive provision of the service. The location information of the wireless relay device 110 may include, for example, information representing a geographical current location of the wireless relay device 110 such as, for example, latitude and longitude information.

The control unit 400 may perform the processing to connect to the wireless relay device 110 in response to the connection priority to the wireless network being higher than a predetermined value, the degree of coincidence between the location information included in the broadcast data and the location information of the terminal device 140 being higher than a predetermined value, and an indication being given from the user that the user is to receive provision of the service.

The control unit 400 may acquire the displacement of the wireless relay device 110 based on the plurality of pieces of broadcast data received at different timings by the communication unit 420. The control unit 400 may perform the processing to connect to the wireless relay device 110 in response to the connection priority to the wireless network being higher than a predetermined value, the displacement included in the broadcast data and the displacement of the terminal device 140 meeting a predetermined condition, and an indication being given from the user that the user is to receive provision of the service.

The displacement of the wireless relay device 110 may be the movement velocity of the wireless relay device 110, and the displacement of the terminal device 140 may be the movement velocity of the terminal device 140. The displacement of the wireless relay device 110 may be the movement direction of the wireless relay device 110, and the displacement of the terminal device 140 may be the movement direction of the terminal device 140.

The control unit 400 may perform the processing to connect to the wireless relay device 110 in response to the connection priority to the wireless network being higher than a predetermined value, the degree of coincidence between the displacement included in the broadcast data and the displacement of the terminal device 140 being higher than a predetermined value, and an indication being given from the user that the user is to receive provision of the service.

When the broadcast data is received, the control unit 400 causes a notification, which is for acceptance of the indication on whether or not to receive the provision of the service, to be presented to the user.

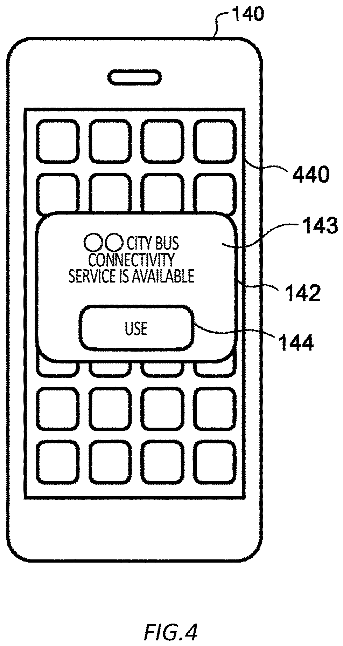

Fig. 4 illustrates an example of information displayed on the display unit 440 when the terminal device 140 receives the reporting information from the wireless relay device 110. The wireless relay device 110 transmits reporting information representing a service that can be provided through the wireless network provided by the wireless relay device 110. The reporting information includes, for example, information representing the connection priority to the wireless network provided by the wireless relay device 110 and information representing content of the service that can be provided by the wireless relay device 110.

The service provided by the wireless relay device 110 may be, for example, mobile broadcasting or may be a service such as a service to provide various information such as news, weather forecast, and traffic information. The service provided by the wireless relay device 110 may be a service provided by an operator of the movable body 100. When the movable body 100 is a public transport organization such as a bus, the wireless network provided by the wireless relay device 110 may be a mobile communication network provided by the operator of the movable body 100 serving as a communication business operator. The operator of the movable body 100 may be, for example, a public body or a business operator.

In one mode, the reporting information may further include location information of the wireless relay device 110. The wireless relay device 110a has a function to calculate a current location of the wireless relay device 110a based on a positioning signal transmitted from, for example, a global navigation satellite system (GNSS) satellite. The wireless relay device 110a transmits the reporting information by including therein the current location of the wireless relay device 110a calculated from the positioning signal as the location information of the wireless relay device 110.

Similarly as in the wireless relay device 110a, for example, the terminal device 140a has a function to calculate a current location of the terminal device 140a based on the positioning signal transmitted from the global navigation satellite system (GNSS) satellite. In a case where the terminal device 140 is connected to the wireless base station 120, when the communication unit 420 of the terminal device 140 receives the reporting information transmitted from the wireless relay device 110, if the connection priority to the wireless network which is included in the reporting information is higher than a predetermined threshold, the control unit 400 compares the current location of the wireless relay device 110 represented by the location information included in the reporting information with the current location of the terminal device 140. When a distance between the current location of the wireless relay device 110 and the current location of the terminal device 140 is less than a predetermined distance, for example, the control unit 400 determines that a degree of coincidence between the current location of the wireless relay device 110 and the current location of the terminal device 140 is higher than a predetermined value.

When the connection priority to the wireless network which is included in the reporting information is higher than the predetermined threshold and it is determined that the degree of coincidence between the current location of the wireless relay device 110 and the current location of the terminal device 140 is higher than the predetermined value, the control unit 400 causes the display unit 440 to display a notification 142 which is for acceptance of the indication on whether or not to receive the provision of the service from the wireless relay device 110. The notification 142 includes an object 143 representing content of the service extracted from the reporting information and an object 144 for acceptance of the indication from the user on whether or not to receive the provision of the service from the wireless relay device 110.

The control unit 400 may cause the display unit 440 to display the object 144 by highlighting the object 144 more than another object displayed on the display unit 440. For example, the control unit 400 may cause the display unit 440 to display the object 144 as an object in a higher layer than that of another object displayed on the display unit 440. The control unit 400 may cause the display unit 440 to display the object 144 with a color different from that of another object displayed on the display unit 440. The control unit 400 may cause the display unit 440 to display the object 144 with a text size different from that of another object displayed on the display unit 440. The control unit 400 may cause the display unit 440 to display the object 144 as an icon different from that of another object displayed on the display unit 440. In addition to the notification 142 to be displayed on the display unit 440 or instead of the notification 142, the control unit 400 may guide the user by way of audio on whether or not to accept the indication on whether or not to receive the provision of the service from the wireless relay device 110.

When a touch operation is detected at a position in a display area of the object 144, the control unit 400 determines that the user indication has been issued that the user is to receive the provision of the service from the wireless relay device 110. When it is determined that the user indication has been issued that the user is to receive the provision of the service from the wireless relay device 110, the control unit 400 performs processing to switch the connection destination of the terminal device 140 to the wireless relay device 110. For example, the control unit 400 causes the communication unit 420 to transmit, to the wireless relay device 110, the indication that the service provision from the wireless relay device 110 is to be selected. When the indication that the service provision from the wireless relay device 110 is to be selected is received, the control unit 200 of the wireless relay device 110a performs the processing to switch the connection destination of the terminal device 140 to the wireless relay device 110. With this configuration, since the connection destination of the terminal device 140 is switched to the wireless relay device 110 in response to the explicit indication of the user, it is possible to appropriately switch the connection destination of the terminal device 140 to the wireless relay device 110 according to an intention of the user.

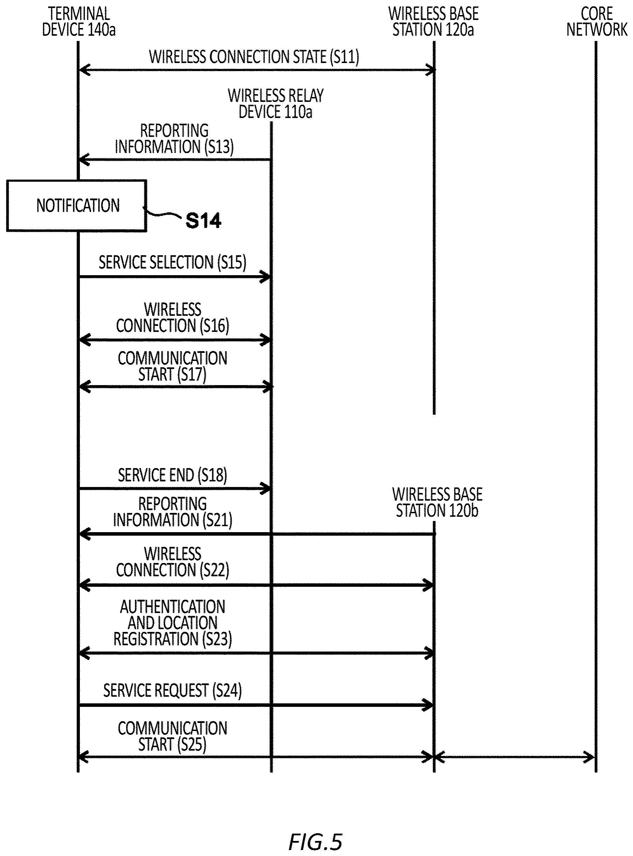

Fig. 5 illustrates an example of a sequence according to a wireless communication method performed by the wireless communications system 5. At the time of start of the present sequence, for example, it is assumed that the terminal device 140a is in a state of wirelessly connected to the wireless base station 120a. Note that it is assumed that the terminal device 140a is in an idle state while communication is not established with the wireless base station 120a. Herein, a case will be exemplified to describe that the movable body 100a is a bus, and the user who possesses the terminal device 140a gets on and off the movable body 100a that is the bus.

When a user 90 gets in the movable body 100a, the terminal device 140a can receive the reporting information which is periodically transmitted from the wireless relay device 110a provided in the movable body 100a (S13). When the communication unit 420 of the terminal device 140a receives the reporting information, the control unit 400 determines whether or not the connection priority to the wireless network provided by the wireless relay device 110a is higher than a predetermined threshold based on information included in the reporting information. Furthermore, in the control unit 400, the control unit 400 of the terminal device 140a determines whether or not a distance between a current location of the wireless relay device 110a which is included in the reporting information received and the current location of the terminal device 140a is shorter than a predetermined distance.

When the connection priority to the wireless network provided by the wireless relay device 110a is higher than the predetermined threshold and the distance between the current location of the wireless relay device 110a which is included in the reporting information and the current location of the terminal device 140a is shorter than the predetermined distance, the control unit 400 performs notification to the display unit 440 (S14). Specifically, the control unit 400 causes the display unit 440 to display the notification 142 illustrated in Fig. 4.

In response to the notification in S14, when the indication is given from the user of the terminal device 140a that the user is to receive the provision of the service, the communication unit 420 transmits, to the wireless relay device 110a, service selection information indicating that the service provided by the wireless relay device 110a is to be used (S15). When the service selection information is received, the wireless relay device 110a and the terminal device 140a establish wireless connection (S16). Subsequently, the terminal device 140a starts communication with the wireless relay device 110a (S17), and the terminal device 140a can use the service provided by the wireless relay device 110a.

In S18, the user performs such an operation on the terminal device 140a that the service provision from the wireless relay device 110a is to be ended. In a case where the movable body 100a is located in the cell 180b of the wireless base station 120b at this time, the communication unit 420 of the terminal device 140a receives the reporting information transmitted from the wireless base station 120b (S21). The terminal device 140a establishes wireless connection with the wireless base station 120b (S22) and performs authentication and location registration (S23). The communication unit 420 of the terminal device 140a transmits a service request to the wireless base station 120b to establish a wireless link (S24) and starts communication with the wireless base station 120b (S25).

In connection to Fig. 4 and Fig. 5, the mode has been described in which the control unit 400 of the terminal device 140 performs the notification for acceptance of the indication on whether or not to receive the provision of the service from the wireless relay device 110 when the degree of coincidence between the current location of the terminal device 140 and the current location of the wireless relay device 110 is higher than the predetermined value. As a modified example of this mode, the control unit 400 may perform the notification for acceptance of the indication on whether or not to receive the provision of the service from the wireless relay device 110 when the degree of coincidence between a displacement of the terminal device 140 and a displacement of the wireless relay device 110 is high. The displacement of the wireless relay device 110 may be calculated based on a plurality of pieces of reporting information transmitted at mutually different timings from the wireless relay device 110.

As another modified example, the control unit 400 may perform the notification for acceptance of the indication on whether or not to receive the provision of the service from the wireless relay device 110 when the degree of coincidence between the current location of the terminal device 140 and the current location of the wireless relay device 110 is high and the degree of coincidence between the displacement of the terminal device 140 and the displacement of the wireless relay device 110 is higher than a predetermined value.

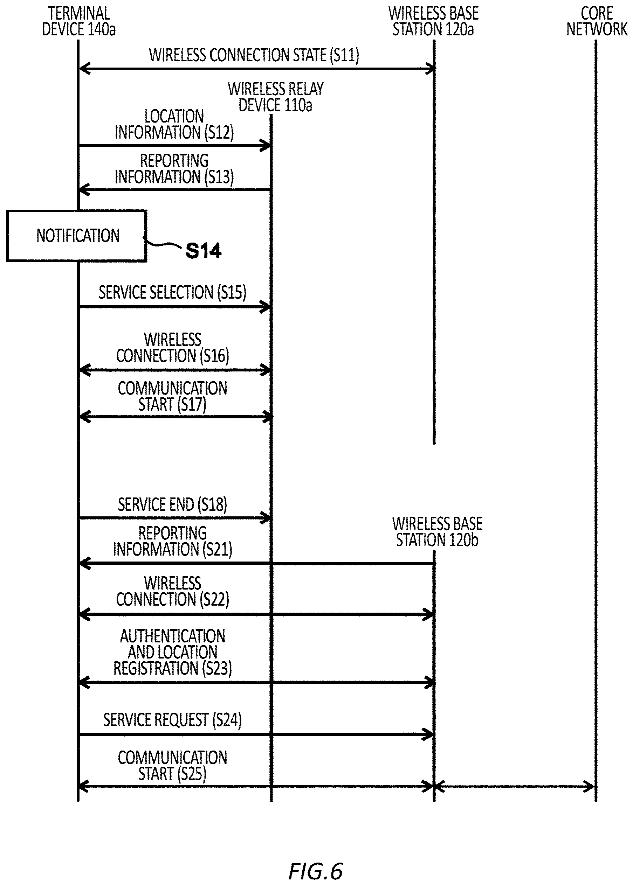

Fig. 6 illustrates an example of a sequence according to the wireless communication method performed by the wireless communications system 5. The sequence illustrated in Fig. 6 is different from the sequence illustrated in Fig. 5 in that step S12 in which the terminal device 140a transmits the location information of the terminal device 140a to the wireless relay device 110a is included and the wireless relay device 110a determines whether or not the connection destination of the terminal device 140a is to be switched based on the location information of the terminal device 140a and the wireless relay device 110. Therefore, the difference from the sequence of Fig. 5 will be mainly described.

When the terminal device 140a detects the wireless relay device 110a, the communication unit 420 of the terminal device 140a periodically transmits the location information of the terminal device 140a to the wireless relay device 110a (S12). When the control unit 200 of the wireless relay device 110a determines that the degree of coincidence between the location information of the terminal device 140a and the location information of the wireless relay device 110a is higher than the predetermined value, the communication unit 220 may transmit the reporting information.

In this mode, the reporting information transmitted from the wireless relay device 110a does not include the location information of the wireless relay device 110a, and the control unit 400 of the wireless relay device 110a determines, based on the information included in the reporting information, whether or not the connection priority to the wireless network provided by the wireless relay device 110a is higher than the predetermined threshold. When the connection priority to the wireless network provided by the wireless relay device 110a is higher than the predetermined threshold, the display unit 440 of the wireless relay device 110a may perform the notification in S14.

As a modified example of the mode described in connection to Fig. 6, when the degree of coincidence between the displacement of the terminal device 140a and the displacement of the wireless relay device 110a is high, the control unit 200 may cause the communication unit 220 to transmit the reporting information. The displacement of the terminal device 140a may be calculated based on the plurality of pieces of location information transmitted at the mutually different timings from the terminal device 140a. As another modified example, the control unit 200 may cause the communication unit 220 to transmit the reporting information when the degree of coincidence between the current location of the terminal device 140 and the current location of the wireless relay device 110 is high and the degree of coincidence between the displacement of the terminal device 140 and the displacement of the wireless relay device 110 is higher than a predetermined value.

According to the wireless communications system 5 described above, in response to the user giving the indication that the user is to receive the service provision provided by the wireless relay device 110, the terminal device 140 can connect to the wireless relay device 110. With this configuration, when a probability that the terminal device 140 is near the movable body 100, the terminal device 140 can connect to the wireless relay device 110. Accordingly, in accordance with the wireless communications system 5, the stability of the communication by the wireless relay device 110 can be improved, and also, the traffic safety in the movable body 100 can be increased.

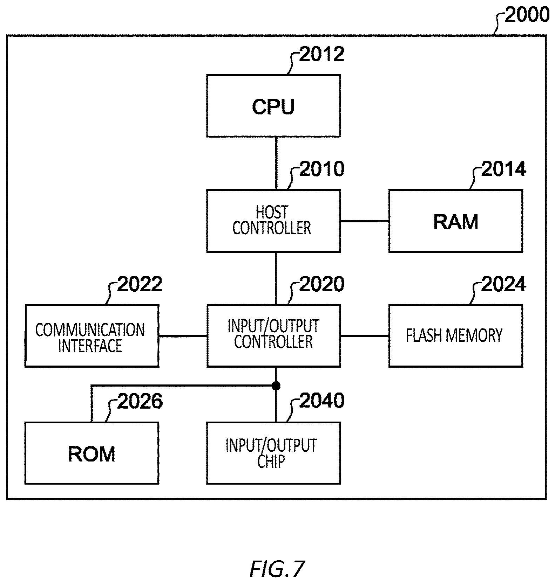

Fig. 7 illustrates an example of a computer 2000 in which a plurality of embodiments of the present invention may be entirely or partially embodied. Programs installed in the computer 2000 can cause the computer 2000 to function as the system according to the embodiment or each unit of the system or various devices such as the wireless base station, the wireless relay device, and the terminal device or each unit of the device, to perform operations associated with the system or each unit of the system or the device or each unit of the device, and/or to perform a process according to the embodiment or a step of the process. Such a program may be executed by a CPU 2012 in order to cause the computer 2000 to execute a specific operation associated with some or all of the processing procedures and the blocks in the block diagrams described herein.

The computer 2000 according to the present embodiment includes the CPU 2012 and a RAM 2014, which are mutually connected by a host controller 2010. The computer 2000 also includes a ROM 2026, a flash memory 2024, a communication interface 2022, and an input/output chip 2040. The ROM 2026, the flash memory 2024, the communication interface 2022, and the input/output chip 2040 are connected to the host controller 2010 via an input/output controller 2020.

The CPU 2012 operates according to programs stored in the ROM 2026 and the RAM 2014, and thereby controls each unit.

The communication interface 2022 communicates with another electronic device via a network. The flash memory 2024 stores a program and data used by the CPU 2012 in the computer 2000. The ROM 2026 stores a boot program or the like executed by the computer 2000 upon activation, and/or a program which depends on hardware of the computer 2000. The input/output chip 2040 may also connect various input/output units such as a keyboard, a mouse, and a monitor, to the input/output controller 2020 via input/output ports such as a serial port, a parallel port, a keyboard port, a mouse port, a monitor port, a USB port, a HDMI (registered trademark) port.

A program is provided via a network or a computer readable storage medium such as a CD-ROM, a DVD-ROM, or a memory card. The RAM 2014, the ROM 2026, or the flash memory 2024 is an example of the computer readable storage medium. The program is installed in the flash memory 2024, the RAM 2014, or the ROM 2026, and executed by the CPU 2012. Information processing written in these programs is read by the computer 2000, and provides cooperation between the programs and the various types of hardware resources described above. An apparatus or a method may be actualized by executing operations or processing of information according to a use of the computer 2000.

For example, when a communication is executed between the computer 2000 and an external device, the CPU 2012 may execute a communication program loaded on the RAM 2014, and instruct the communication interface 2022 to execute communication processing based on processing written in the communication program. Under the control of the CPU 2012, the communication interface 2022 reads transmission data stored in a transmission buffer processing region provided in a recording medium such as the RAM 2014 or the flash memory 2024, transmits the read transmission data to the network, and writes reception data received from the network into a reception buffer processing region or the like provided on the recording medium.

In addition, the CPU 2012 may cause all or a necessary portion of a file or a database stored in a recording medium such as the flash memory 2024 and the like to be read into the RAM 2014, and execute various types of processing on the data on the RAM 2014. Next, the CPU 2012 writes back the processed data into the recording medium.

Various types of information such as various types of programs, data, a table, and a database may be stored in the recording medium and may be subjected to information processing. The CPU 2012 may execute, on the data read from the RAM 2014, various kinds of processing including various types of operations, information processing, conditional judgement, conditional branching, unconditional branching, information retrieval/replacement, or the like described herein and specified by instruction sequences of the programs, and write back a result into the RAM 2014. In addition, the CPU 2012 may retrieve information in a file, a database, or the like in the recording medium. For example, when multiple entries each having an attribute value of a first attribute associated with an attribute value of a second attribute are stored in the recording medium, the CPU 2012 may retrieve an entry having a designated attribute value of the first attribute that matches a condition from these multiple entries, and read the attribute value of the second attribute stored in this entry, thereby obtaining the attribute value of the second attribute associated with the first attribute that satisfies a predetermined condition.

The programs or software modules explained above may be stored in the computer readable storage medium on the computer 2000 or in the vicinity of the computer 2000. A recording medium such as a hard disk or a RAM provided in a server system connected to a dedicated communication network or the Internet can be used as the computer readable storage medium. A program stored in the computer readable storage medium may be provided to the computer 2000 via a network.

Programs which are installed in the computer 2000 and cause the computer 2000 to function as the wireless relay device 110 may cause the computer 2000 to function as each unit of the wireless relay device 110 by working with the CPU 2012 or the like. When information processing described in these programs are read by the computer 2000, the computer 2000 functions as each unit of the wireless relay device 110 that is specific means in which software and various hardware resources described above cooperate with each other. With these specific means, the specific wireless relay device 110 appropriate for an intended use can be configured by realizing the calculations or computations of the information appropriate for the intended use of the computer 2000 of the present embodiment.

Programs which are installed in the computer 2000 and cause the computer 2000 to function as the wireless base station 120 may cause the computer 2000 to function as each unit of the wireless base station 120 by working with the CPU 2012 or the like. When information processing described in these programs are read by the computer 2000, the computer 2000 functions as each unit of the wireless base station 120 that is specific means in which software and various hardware resources described above cooperate with each other. With these specific means, the specific wireless base station 120 suitable for an intended use can be configured by realizing the calculations or computations of the information appropriate for the intended use of the computer 2000 of the present embodiment.

Programs which are installed in the computer 2000 and cause the computer 2000 to function as the terminal device 140 may cause the computer 2000 to function as each unit of the terminal device 140 by working with the CPU 2012 or the like. When information processing described in these programs are read by the computer 2000, the computer 2000 functions as each unit of the terminal device 140 that is specific means in which software and various hardware resources described above cooperate with each other. With these specific means, the specific terminal device 140 suitable for an intended use can be configured by realizing the calculations or computations of the information appropriate for the intended use of the computer 2000 of the present embodiment.

Various embodiments have been described with reference to the block diagrams and the like. In the block diagrams, each block may represent (1) a stage of a process in which an operation is executed, or (2) each unit of the apparatus having a role in executing the operation. A specific step and each unit may be implemented by a dedicated circuit, a programmable circuit supplied with computer readable instructions stored on a computer readable storage medium, and/or a processor supplied with computer readable instructions stored on a computer readable storage medium. The dedicated circuit may include a digital and/or analog hardware circuit, or may include an integrated circuit (IC) and/or a discrete circuit. The programmable circuit may include a reconfigurable hardware circuit including logical AND, logical OR, logical XOR, logical NAND, logical NOR, and another logical operation, and a memory element or the like such as a flip-flop, a register, a field programmable gate array (FPGA), a programmable logic array (PLA), or the like.

The computer readable storage medium may include any tangible device capable of storing instructions to be executed by an appropriate device. Thereby, the computer readable storage medium having instructions stored therein forms at least a part of a product including instructions which can be executed to provide means for executing processing procedures or operations specified in the block diagrams. An example of the computer readable storage medium may include an electronic storage medium, a magnetic storage medium, an optical storage medium, an electromagnetic storage medium, a semiconductor storage medium, etc. A more specific example of the computer readable storage medium may include a floppy (registered trademark) disk, a diskette, a hard disk, a random-access memory (RAM), a read-only memory (ROM), an erasable programmable read-only memory (EPROM or flash memory), an electrically erasable programmable read-only memory (EEPROM), a static random-access memory (SRAM), a compact disc read-only memory (CD-ROM), a digital versatile disc (DVD), a Blu-ray (registered trademark) disc, a memory stick, or an integrated circuit card.

The computer readable instructions may include an assembler instruction, an instruction-set-architecture (ISA) instruction, a machine instruction, a machine-dependent instruction, a microcode, a firmware instruction, state-setting data, or either of source code or object code written in any combination of one or more programming languages including an object-oriented programming language such as Smalltalk (registered trademark), JAVA (registered trademark), and C++, or the like, and a conventional procedural programming language such as a "C" programming language or a similar programming language.

Computer readable instructions may be provided to a processor of a general purpose computer, a special purpose computer, or another programmable data processing apparatus, or to programmable circuit, locally or via a local area network (LAN), wide area network (WAN) such as the Internet or the like, and a computer readable instruction may be executed to provide means for executing operations specified in the described processing procedures or block diagrams. Examples of the processor include a computer processor, a processing unit, a microprocessor, a digital signal processor, a controller, a microcontroller, and the like.

While the embodiments of the present invention have been described, the technical scope of the present invention is not limited to the above described embodiments. It is apparent to persons skilled in the art that various alterations and improvements can be added to the above-described embodiments. It is also apparent from the scope of the claims that the embodiments added with such alterations or improvements can be included in the technical scope of the present invention.

The operations, procedures, steps, and stages of each process performed by an apparatus, system, program, and method shown in the claims, embodiments, or diagrams can be performed in any order as long as the order is not indicated by "prior to," "before," or the like and as long as the output from a previous process is not used in a later process. Even if the process flow is described using phrases such as "first" or "next" in the claims, embodiments, or diagrams, it does not necessarily mean that the process must be performed in this order.

### EXPLANATION OF REFERENCES

5: wireless communications system;
90: user;
100: movable body;
110: wireless relay device;
120: wireless base station;
140: terminal device;
142: notification;
143: object;
144: object;
180: cell;
200: control unit;
210: storage unit;
220: communication unit;
400: control unit;
410: storage unit;
420: communication unit;
440: display unit;
2000: computer;
2010: host controller;
2012: CPU;
2014: RAM;
2020: input/output controller;
2022: communication interface;
2024: flash memory;
2026: ROM; and
2040: input/output chip.

## Claims

1. A wireless relay device comprising:
a communication unit which broadcasts broadcast data representing a service that can be provided by the wireless relay device; and
a control unit which performs, when an indication is given from a terminal device that the terminal device is to receive provision of the service, processing to connect to the wireless relay device.

2. The wireless relay device according to claim 1, wherein
the communication unit further receives terminal location information representing location information of the terminal device, and
the control unit causes the wireless relay device to cause the communication unit to broadcast the broadcast data when the location information of the terminal device and location information of the wireless relay device meet a predetermined condition.

3. The wireless relay device according to claim 2, wherein
the control unit causes the communication unit to broadcast the broadcast data when a degree of coincidence between the location information of the terminal device and the location information of the wireless relay device is higher than a predetermined value.

4. The wireless relay device according to claim 2, wherein
the control unit
acquires a displacement of the terminal device based on the terminal location information received at different timings by the communication unit, and
causes the communication unit to broadcast the broadcast data when the displacement of the terminal device and a displacement of the wireless relay device meet a predetermined condition.

5. The wireless relay device according to claim 4, wherein
the control unit causes the communication unit to broadcast the broadcast data when a degree of coincidence between the displacement of the terminal device and the displacement of the wireless relay device is higher than a predetermined value.

6. The wireless relay device according to according to any one of claims 1 to 5, wherein
the broadcast data is data broadcasted as reporting information.

7. A movable body comprising the wireless relay device according to any one of claims 1 to 5.

8. A program for causing a computer to function as the wireless relay device according to any one of claims 1 to 5.

9. A terminal device comprising:
a communication unit which receives broadcast data which is broadcasted from a wireless relay device and represents a service that can be provided by the wireless relay device; and
a control unit which performs, in response to an indication being given from a user that the user is to receive provision of the service, processing to connect to the wireless relay device.

10. The terminal device according to claim 9, wherein
the broadcast data includes information representing a connection priority to a wireless network,
the broadcast data further includes location information of the wireless relay device, and
the control unit performs the processing to connect to the wireless relay device in response to the connection priority to the wireless network being higher than a predetermined value, the location information included in the broadcast data and location information of the terminal device meeting a predetermined condition, and an indication being given from a user that the user is to receive provision of the service.

11. The terminal device according to claim 10, wherein
the control unit performs the processing to connect to the wireless relay device in response to the connection priority to the wireless network being higher than the predetermined value, a degree of coincidence between the location information included in the broadcast data and the location information of the terminal device being higher than a predetermined value, and an indication being given from a user that the user is to receive provision of the service.

12. The terminal device according to claim 10, wherein
the control unit
acquires a displacement of the wireless relay device based on a plurality of pieces of broadcast data received at different timings by the communication unit, and
performs the processing to connect to the wireless relay device in response to the connection priority to the wireless network being higher than a predetermined value, the displacement included in the broadcast data and a displacement of the terminal device meeting a predetermined condition, and an indication being given from a user that the user is to receive provision of the service.

13. The terminal device according to claim 12, wherein
the control unit performs the processing to connect to the wireless relay device in response to the connection priority to the wireless network being higher than a predetermined value, a degree of coincidence between the displacement included in the broadcast data and the displacement of the terminal device being higher than a predetermined value, and an indication being given from a user that the user is to receive provision of the service.

14. The terminal device according to according to any one of claims 9 to 13, wherein
when the broadcast data is received, the control unit causes a notification to be presented to the user, the notification being for acceptance of an indication on whether or not to receive the provision of the service.

15. The terminal device according to any one of claims 9 to 13, wherein
the broadcast data is data broadcasted as reporting information.

16. A program for causing a computer to function as the terminal device according to any one of claims 9 to 13.

17. A wireless communication method performed by a wireless relay device, the wireless communication method comprising:
broadcasting broadcast data representing a service that can be provided by the wireless relay device; and
performing, when an indication is given from a terminal device that the terminal device is to receive provision of the service, processing to connect to the wireless relay device.

18. A wireless communication method comprising:
receiving broadcast data which is broadcasted from a wireless relay device and represents a service that can be provided by the wireless relay device; and
performing, in response to an indication being given from a user that the user is to receive provision of the service, processing to connect to the wireless relay device.
